**Europäisches Patentamt**

**European Patent Office**

**Office européen des brevets**

(19)

(11) Veröffentlichungsnummer: **0 076 910**
**B1**

(12)

# EUROPÄISCHE PATENTSCHRIFT

(45) Veröffentlichungstag der Patentschrift:
02.05.85

(21) Anmeldenummer: 82107591.8

(22) Anmeldetag: 19.08.82

(51) Int. Cl.⁴: **C 05 G 3/08**, C 05 C 7/00

(54) Nitrifikationshemmendes Mittel und Verfahren zu seiner Herstellung.

(30) Priorität: 13.10.81 DE 3140817

(43) Veröffentlichungstag der Anmeldung:
20.04.83 Patentblatt 83/16

(45) Bekanntmachung des Hinweises auf die Patenterteilung:
02.05.85 Patentblatt 85/18

(84) Benannte Vertragsstaaten:
AT BE CH FR GB IT LI NL

(56) Entgegenhaltungen:
EP - B - 0 019 881
DE - A - 2 040 119
DE - A - 2 051 935
DE - A - 2 702 284
DE - A - 2 707 639
FR - A - 1 232 366
FR - A - 2 385 660

(73) Patentinhaber: SKW Trostberg Aktiengesellschaft,
Dr.-Albert-Frank-Strasse 32 Postfach 1150/1160,
D-8223 Trostberg (DE)

(72) Erfinder: Michaud, Horst, Dr., Sonnenleite 11,
D-8223 Trostberg (DE)
Erfinder: Raveling, Hermann, Dr., Ginzing 5,
D-8226 Altenmarkt (DE)
Erfinder: Von Seyerl, Joachim, Seestrasse 5 b,
D-8221 Seeon (DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)

## Beschreibung

Die Erfindung betrifft ein Mittel zur Hemmung der Nitrifikation stickstoffhaltiger Düngemittel, welches als nitrifikationshemmenden Wirkstoff Dicyandiamid enthält, sowie ein Verfahren zur Herstellung dieses Mittels.

Es ist bekannt, dass das durch Zersetzung stickstoffhaltiger Verbindungen im Boden freigesetzte Ammoniak durch die Anwesenheit von nitrifizierenden Bakterien einer Oxidation unterliegt, die als Nitrifikation bezeichnet wird. Dabei wird der Ammonium- oder Amidstickstoff der stickstoffhaltigen Verbindungen, namentlich von Stickstoffdüngemitteln, durch das *Bacterium nitrosomonas* zu Nitrit oxidiert. Das Nitrit wird dann durch das *Bacterium nitrobacter* in das Nitrat umgewandelt, welches im Boden leicht beweglich ist und durch Auswaschen verlorengeht. Damit hat die Nitrifikation erhebliche Stickstoffverluste zur Folge, was ein erhebliches Problem bei der Stickstoffdüngung darstellt.

Es ist nun bekannt, dass man die Ausnützung des Stickstoffdüngemittels durch die Pflanze dadurch verbessern kann, dass man dem Stickstoffdüngemittel einen Nitrifikationshemmer zusetzt. So ist es bekannt, Dicyandiamid als nitrifikationshemmendes Agens Stickstoffdüngern zuzusetzen, die den Stickstoff in Form von Ammonium- oder Amidstickstoff enthalten. Hierdurch wird die durch das *Bacterium nitrosomonas* bewirkte Oxidation der Ammoniumstufe des Stickstoffdüngers zur Nitritstufe unterbunden.

Die Anwendung des marktgängigen Dicyandiamids für diesen Zweck stösst jedoch zum Teil auf erhebliche Schwierigkeiten. So besitzt dieses Material namentlich dann, wenn es in feinkörniger Form vorliegt, was zu seiner Anwendung in dem Stickstoffdüngemittel erforderlich ist, eine mangelnde Fliessfähigkeit und kann daher nur schlecht dosiert werden. Weiterhin neigt das Dicyandiamid bei der Lagerung zum Verbacken, insbesondere dann, wenn es in grösseren Gebinden aufbewahrt wird. Da die Löslichkeit des Dicyandiamids in Wasser und Düngemittellösungen nicht besonders gross ist, reicht die Lösungsgeschwindigkeit dieses Wirkstoffs bei der Zugabe zu Düngemittellösungen oft nicht aus, was insbesondere auch dadurch bedingt ist, dass dieses Material beim Zusatz zu wässerigen Lösungen zum Verklumpen neigt.

Es ist zwar bekannt, dass man einen Teil dieser Probleme durch den Zusatz von Antibackmitteln, wie beispielsweise Siliciumdioxid, Diatomeenerde, Attapulgit und dergleichen, lösen kann. In vielen Fällen ist jedoch der Gehalt unlöslicher Stoffe in dem Düngemittel unerwünscht, da diese beim Einarbeiten des Dicyandiamids in Harnstoffprills oder bei der Zugabe von Dicyandiamid zu flüssigem Ammoniak zu Schwierigkeiten führen können.

Die Aufgabe der vorliegenden Erfindung besteht somit darin, ein Mittel zur Hemmung der Nitrifikation stickstoffhaltiger Düngemittel anzugeben, welches auch bei der Lagerung in grossen Gebinden nicht zum Verbacken neigt, eine gute Fliessfähigkeit aufweist, sicht gut in Düngemittellösungen löst und dabei auch nicht zum Verklumpen neigt und darüber hinaus ein verbessertes Schüttgewicht und eine erhöhte Härte und eine verbesserte Abriebfestigkeit aufweist, wenn es in Granulatform vorliegt.

Diese Aufgabe wird erfindungsgemäss gelöst durch ein Mittel zu Hemmung der Nitrifikation stickstoffhaltiger Düngemittel, welches dadurch gekennzeichnet ist, dass es in granulierter oder verpresster Form vorliegt und aus Dicyandiamid und 1 bis 40 Gew.-% eines in Wasser und/oder Ammoniak leicht löslichen Düngemittels besteht.

Vorzugsweise enthält dieses Mittel 5 bis 20 Gew.-% des in Wasser und/oder Ammoniak leicht löslichen Düngemittels. Erfindungsgemäss besonders bevorzugte Düngemittel sind Harnstoff, Calcium- und Ammoniumnitrat, die einzeln oder auch in Kombination verwendet werden können.

Das beanspruchte Mittel besitzt vorzugsweise eine solche Korngrössenverteilung, dass mehr als 95% des Materials eine Teilchengrösse im Bereich von 0,1 bis 2 mm aufweist. Vorteilhafter ist es jedoch, das Mittel zu granulieren oder zu verdichten bzw. zu kompaktieren. Dabei sollte das Mittel vorzugsweise ein Schüttgewicht von mehr als 500 g/l aufweisen.

Es hat sich gezeigt, dass durch den erfindungsgemässen Zusatz eines in Wasser und/oder Ammoniak leicht löslichen Düngemittels zu dem Nitrifikationshemmer Dicyandiamid ein nitrifikationshemmendes Mittel oder Additiv geschaffen wird, welches bei Kombination mit einem stickstoffhaltigen Düngemittel die gewünschte Hemmwirkung entfaltet und den Vorteil besitzt, dass keine artfremden oder unerwünschten Zusätze in die mit dem Inhibitor versetzten Düngemittel gelangen. Dabei lässt sich bei Anwendung des beanspruchten Mittels in granulierter oder verpresster Form eine wesentliche Erhöhung des Schüttgewichts erzielen, wobei überraschenderweise die Härte und die Abriebfestigkeit der granulierten und/oder kompaktierten Produkte in erheblicher Weise erhöht werden.

Ein weiterer Gegenstand der Erfindung ist ein Verfahren zur Herstellung dieses Mittels, das dadurch gekennzeichnet ist, dass man feinkörniges Dicyandiamid, welches vorzugsweise eine Teilchengrösse von weniger als 0,5 mm aufweist, mit einer wässerigen Lösung eines in Wasser und/oder Ammoniak leicht löslichen Düngemittels, wie Harnstoff, Calcium- und/oder Ammoniumnitrat, besprüht und anschliessend trocknet.

Gemäss einer bevorzugten Ausführungsform dieses erfindungsgemässen Verfahrens granuliert man das feinkörnige Dicyandiamid unter Verwendung einer wässerigen Lösung eines in Wasser und/oder Ammoniak leicht löslichen Düngemittels als Granulierhilfsmittel. Zu dieser Herstellung des fliessfähigen Dicyandiamids wird das feinkörnige Ausgangsmaterial auf einem Granulierteller in üblicher Weise durch Aufsprühen der genannten wässerigen Lösung des in Wasser und/oder Ammoniak leicht löslichen Düngemittels zu einem kompaktierten Dicyandiamid aufgebaut. Dabei lässt sich unter Anwendung dieser Düngemittellösung ein festeres, dichteres und leichter lösliches Granulat herstellen, als es bei der bisher üblichen Granulierung mit Wasser der Fall ist.

Das folgende Beispiel dient der weiteren Erläuterung der Erfindung.

*Beispiel*

Zu Vergleichszwecken bildet man granuliertes Dicyandiamid auf der einen Seite unter Verwendung von Wasser als Granulierhilfsmittel und andererseits erfindungsgemäss unter Verwendung einer wässerigen Harnstofflösung als Granulierhilfsmittel. Anschliessend bestimmt man die Lösungsgeschwindigkeit, die Festigkeit und das Schüttgewicht des erhaltenen Granulats.

Zur Ermittlung der Lösungsgeschwindigkeit wird die Zeit gemessen, die bis zum vollständigen Auflösen von 2,5 g des erhaltenen Granulats (Kornfraktionen <0,5 mm) in 100 g Wasser unter Rühren (Magnetrührer, der bei mittlerer Drehzahl betrieben wird) bei 20° C notwendig ist.

Die Beurteilung der Festigkeit erfolgt durch einen Vergleich der Siebanalyse vor und nach einem dynamischen Belastungstest, der wie folgt durchgeführt wird: Man beschickt ein Fallrohr aus Metall (mit einer Höhe von 25 cm und einem Durchmesser von 42 mm) mit 50 g des erhaltenen Granulats. Dann lässt man ein Gewicht von 500 g dreimal aus einer Höhe von 20 cm auf das Granulat fallen. Aus der Verschiebung des Kornspektrums vor und nach dieser Belastung kann unmittelbar die Festigkeit des Granulats beurteilt werden.

Das Schüttgewicht des Granulats wird durch Auswiegen eines Volumens von 1000 cm³ (Messzylinder) bestimmt.

Hierbei erhält man die folgenden Ergebnisse:

a) *Vergleich*

Man granuliert 200 g Dicyandiamid durch Aufsprühen von 57 g Wasser, wonach man das Granulat bei 50° C im Vakuum trocknet. Das erhaltene Material besitzt ein Schüttgewicht von etwa 500 g/l (gegenüber etwa 400 g/l von normalem Dicyandiamid) und eine Lösungsgeschwindigkeit von etwa 0,33 g/min für den Kornbereich <0,5 mm. Die Siebanalyse vor und nach dem oben beschriebenen Belastungstest ergibt folgende Ergebnisse:

| | >2 mm | >1,6 mm | >1 mm | >0,5 mm | >0,25 mm | <0,25 mm |
|---|---|---|---|---|---|---|
| vor | 0,0 | 1,8 | 10,0 | 57,8 | 24,4 | 6,0 |
| nach | 0,0 | 1,0 | 8,0 | 27,0 | 51,2 | 12,8 |

b) *Erfindung*

Man granuliert 200 g Dicyandiamid mit 53 g einer 40%igen wässerigen Harnstofflösung. Das Granulat besitzt ein Schüttgewicht von etwa 530 g/l und einen Harnstoffgehalt von etwa 8,4 Gew.-%. Die Lösungsgeschwindigkeit beträgt etwa 0,56 g/min für die Kornfraktion <0,5 mm. In der folgenden Tabelle sind die Ergebnisse der Siebanalyse vor und nach der Durchführung des oben beschriebenen Belastungstests zusammengestellt.

| | >2 mm | >1,6 mm | >1 mm | >0,5 mm | >0,25 mm | <0,25 mm |
|---|---|---|---|---|---|---|
| vor | 0,2 | 0,6 | 5,6 | 40,2 | 41,8 | 11,6 |
| nach | 0,0 | 0,6 | 4,4 | 36,6 | 45,2 | 13,2 |

Ein Vergleich der obigen Angaben lässt erkennen, dass das erfindungsgemässe Mittel bei höherem Schüttgewicht eine deutlich grössere Festigkeit besitzt und eine überraschend verbesserte Lösungsgeschwindigkeit aufweist.

**Patentansprüche**

1. Mittel zur Hemmung der Nitrifikation stickstoffhaltiger Düngemittel, dadurch gekennzeichnet, dass es in granulierter oder verpresster Form vorliegt und aus Dicyandiamid und 1 bis 40 Gew.-% eines in Wasser und/oder Ammoniak leicht löslichen Düngemittels besteht.

2. Mittel nach Anspruch 1, dadurch gekennzeichnet, dass es als Düngemittel Harnstoff, Calcium- und/oder Ammoniumnitrat enthält.

3. Mittel nach einem der Ansprüche 1 oder 2, dadurch gekennzeichnet, dass es eine Korngrösse im Bereich von 0,1 bis 2 mm aufweist.

4. Mittel nach den Ansprüchen 1 bis 3, dadurch gekennzeichnet, dass es ein Schüttgewicht von mehr als 500 g/l besitzt.

5. Verfahren zur Herstellung des Mittels nach einem der Ansprüche 1 bis 4, dadurch gekennzeichnet, dass man feinkörniges Dicyandiamid mit einer wässerigen Lösung eines in Wasser und/oder Ammoniak leicht löslichen Düngemittels besprüht und anschliessend trocknet.

6. Verfahren nach Anspruch 5, dadurch gekennzeichnet, dass man das feinkörnige Dicyandiamid unter Verwendung einer wässerigen Lösung eines in Wasser und/oder Ammoniak leicht löslichen Düngemittels granuliert.

7. Verfahren nach einem der Ansprüche 5 oder 6, dadurch gekennzeichnet, dass man als Düngemittel Harnstoff, Calcium- und/oder Ammoniumnitrat verwendet.

## Claims

1. Agent for inhibition of the nitrification of nitrogen-containing fertilisers, characterised in that it is present in granulated or compressed form and consists of dicyandiamide and 1 to 40% in weight of a fertiliser readily soluble in water and/or ammonia.

2. Agent according to Claim 1, characterised in that, as fertiliser, it contains urea, calcium nitrate and/or ammonium nitrate.

3. Agent according to one of Claims 1 or 2, characterised in that it has a grain size in the range of 0.1 to 2 mm.

4. Agent according to Claims 1 to 3, characterised in that it has a bulk density of more than 500 g/l.

5. Process for the production of the agent according to one of Claims 1 to 4, characterised in that one sprays finely granular dicyandiamide with an aqueous solution of a fertiliser readily soluble in water and/or ammonia, and subsequently dries.

6. Process according to Claim 5, characterised in that one granulates the fine-grained dicyandiamide with the use of an aqueous solution of a fertiliser readily soluble in water and/or ammonia.

7. Process according to one of Claims 5 or 6, characterised in that as fertiliser one uses urea, calcium nitrate and/or ammonium nitrate.

## Revendications

1. Agent inhibiteur de la nitrification d'engrais azotés, caractérisé en ce qu'il se présente sous forme granulée ou comprimée et est constitué de dicyandiamide et de 1 à 40% en poids d'un engrais facilement soluble dans l'eau et/ou dans l'ammoniaque.

2. Agent suivant la revendication 1, caractérisé en ce qu'il contient comme engrais de l'urée, du nitrate de calcium et/ou du nitrate d'ammonium.

3. Agent suivant l'une des revendications 1 ou 2, caractérisé en ce qu'il présente une grosseur de grains dans le domaine de 0,1 à 2 mm.

4. Agent suivant les revendications 1 à 3, caractérisé en ce qu'il possède une densité apparente de plus de 500 g/l.

5. Procédé de préparation de l'agent suivant l'une des revendications 1 à 4, caractérisé en ce qu'on pulvérise sur du dicyandiamide de fine granulométrie une solution aqueuse d'un engrais facilement soluble dans l'eau et/ou dans l'ammoniaque, et qu'on sèche ensuite.

6. Procédé suivant la revendication 5, caractérisé en ce qu'on granule le dicyandiamide de fine granulométrie en utilisant une solution aqueuse d'un engrais facilement soluble dans l'eau et/ou dans l'ammoniaque.

7. Procédé suivant l'une des revendications 5 ou 6, caractérisé en ce qu'on utilise comme engrais de l'urée, du nitrate de calcium et/ou du nitrate d'ammonium.